# EUROPEAN PATENT SPECIFICATION

(11) **EP 3 905 181 B1**
(45) Date of publication and mention of the grant of the patent: **04.03.2026**
(21) Application number: 20744857.2
(22) Date of filing: 23.01.2020
(51) Int. Cl.: G06Q 30/0282, G06Q 30/0601, G06N 3/0464, G06N 3/0475, G06N 3/09, G06N 3/094

(54) **ELECTRONIC DEVICE AND METHOD FOR OPERATING SAME**
ELEKTRONISCHE VORRICHTUNG UND VERFAHREN ZUM BETRIEB DAVON
DISPOSITIF ÉLECTRONIQUE ET PROCÉDÉ DE FONCTIONNEMENT ASSOCIÉ

(30) Priority: 24.01.2019 KR 20190009240
(43) Date of publication of application: 03.11.2021
(73) Proprietor: Samsung Electronics Co., Ltd., Suwon-si, Gyeonggi-do 16677 (KR)
(72) Inventor: LEE, Jungmin, Suwon-si, Gyeonggi-do 16677 (KR); CHO, Eunbi, Suwon-si, Gyeonggi-do 16677 (KR); CHOI, Yoonhee, Suwon-si, Gyeonggi-do 16677 (KR); CHOI, Changhwan, Suwon-si, Gyeonggi-do 16677 (KR)
(74) Representative: Gulde & Partner
(86) International application number: PCT/KR2020/001184
(87) International publication number: WO 2020/153796

(56) References cited:
- EP-B1- 3 267 368
- CN-A- 106 202 362
- CN-A- 106 504 064
- CN-A- 108 109 055
- CN-A- 108 428 166
- JP-A- 2012 014 544
- JP-A- 2017 027 597
- KR-A- 20090 058 389
- KR-A- 20180 017 597
- KR-A- 20180 133 121

## Description

### TECHNICAL FIELD

Various embodiments relate to electronic devices and operating methods thereof, and more particularly, to electronic devices for recommending one or more clothing items, and operating methods thereof.

### BACKGROUND ART

As data traffic increases exponentially with the development of computer technology, artificial intelligence has become an important trend driving future innovation. Representative technologies of artificial intelligence may include pattern recognition, machine learning, expert systems, neural networks, natural language processing, and the like.

A neural network models characteristics of human biological neurons by using mathematical expressions. The neural network may generate mapping between input data and output data, and the ability to generate the mapping can be represented by the learning ability of the neural network. Furthermore, the neural network has a generalization ability to generate correct output data for input data that has not been used for learning, based on a learning result. In similar regards, publication CN 106202362 A and CN 106504064 A relate to a method for garment classification and recommendation based on images of garment items, using a GoogleNet neural network, publication CN 108109055 A relates to methods for identifying clothes information from an image including color information as well as style and cultural information, and publication CN 108428166 A relates to a method for garment classification and recommendation based on images of garment items, using a convolutional neural network.

### DESCRIPTION OF EMBODIMENTS SOLUTION TO PROBLEM

Various embodiments provide electronic devices capable of recommending one or more clothing items among clothing items owned by a user, based on a plurality of recommended coordination sets, as well as operating methods of the electronic devices and computer program products, corresponding to the appended claims.

### ADVANTAGEOUS EFFECTS OF DISCLOSURE

According to an electronic device according to an embodiment, a clothing image may be easily obtained from an image of a user wearing a clothing item.

According to an electronic device according to an embodiment, one or more clothing items among the clothing items owned by a user may be recommended based on a plurality of recommended coordination sets, to a user, to help the user in selecting clothes.

According to an electronic device according to an embodiment, by displaying a clothing item selected by the user to be distinctive from a recommended clothing item, the clothing item selected by the user may be easily identified in a recommended coordination set when the recommended coordination set is displayed.

### BRIEF DESCRIPTION OF DRAWINGS

FIG. 1 is a reference view of a method of determining, by an electronic device according to an embodiment, a recommended item among a plurality of clothing items.
FIG. 2 is a flowchart of an operating method of an electronic device according to an embodiment.
FIG. 3 is a reference view of a method of extracting, by an electronic device according to an embodiment, a clothing image and meta data corresponding to a clothing item.
FIG. 4 is a reference view of a method of determining, by an electronic device according to an embodiment, a recommended item among a plurality of clothing items.
FIG. 5 is a view of an interface screen displayed on an electronic device according to an embodiment.
FIG. 6 is a reference view of a method of evaluating, by an electronic device according to an embodiment, the appropriateness of a combination of a plurality of clothing items.
FIG. 7 is a reference view of a method of determining, by an electronic device according to an embodiment, a recommended item based on candidate coordination sets.
FIG. 8 is a reference view of a method of determining, by an electronic device according to an embodiment, a recommended item among a plurality of clothing items.
FIGS. 9A to 9C are views of screens on which an electronic device according to an embodiment displays a recommended coordination set.
FIG. 10 is a block diagram of a configuration of an electronic device according to an embodiment.
FIG. 11 is a block diagram of a configuration of a processor according to an embodiment.
FIG. 12 is a view of an example in which an electronic device and a server are in association with each other to learn and recognize data, according to an embodiment.
FIG. 13 is a block diagram of a configuration of an electronic device according to another embodiment.

### MODE OF DISCLOSURE

The terms used in the specification are briefly described and the disclosure is described in detail.

The terms used in the disclosure have been selected from currently widely used general terms in consideration of the functions in the disclosure. However, the terms may vary according to the intention of one of ordinary skill in the art, case precedents, and the advent of new technologies. Also, for special cases, meanings of the terms selected by the applicant are described in detail in the description section. Accordingly, the terms used in the disclosure are defined based on their meanings in relation to the contents discussed throughout the specification, not by their simple meanings.

When a part may "include" a certain constituent element, unless specified otherwise, it may not be construed to exclude another constituent element but may be construed to further include other constituent elements. Terms such as "~ portion," "~ unit," "~ module," and "~ block" stated in the specification may signify a unit to process at least one function or operation and the unit may be embodied by hardware, software, or a combination of hardware and software.

In the specification, the term "user" refers to a person who controls a system, a function, or an operation, and may include a developer, a manager, or an installation engineer.

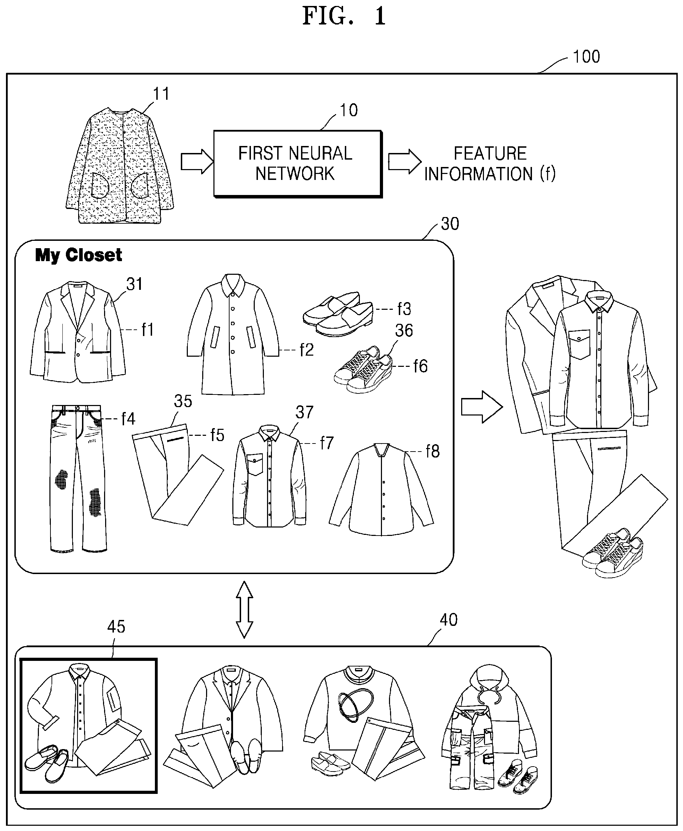

FIG. 1 is a reference view of a method of determining, by an electronic device 100 according to an embodiment, a recommended item among a plurality of clothing items.

The electronic device 100 according to an embodiment may be implemented in various forms. For example, the electronic device 100 may include mobile phones, smart phones, laptop computers, desktop computers, tablet PCs, e-book readers, digital broadcasting terminals, personal digital assistants (PDAs), portable multimedia players (PMPs), navigation devices, MP3 players, camcorders, Internet protocol televisions (IPTVs), digital televisions (DTVs), wearable devices, and the like, but the disclosure is not limited thereto.

The electronic device 100 may obtain clothing images corresponding to a plurality of clothing items. The clothing items may include clothing items that a user actually owns. For example, the clothing items may include various types of clothes including tops such as T-shirts, sweaters, blouses, and the like, bottoms such as pants, skirts, and the like, outerwear such as jackets, jumpers, coats, and the like, shoes such as dress shoes, sports shoes, boots, slippers, and the like, bags, gloves, scarfs, shawls, sunglasses, and the like However, the disclosure is not limited thereto.

The electronic device 100 according to an embodiment may obtain clothing images corresponding to clothing items by capturing images of the clothing items by using a camera. Alternatively, the electronic device 100 may receive clothing images corresponding to clothing items from an external apparatus. However, the disclosure is not limited thereto.

The electronic device 100 according to an embodiment may extract feature information f corresponding to each of the clothing items, by inputting the clothing images corresponding to clothing items to a first neural network 10. When a clothing image 11 corresponding to a clothing item is input to the first neural network 10, the first neural network 10 may output the feature information f corresponding to the clothing item. For example, when a first clothing image corresponding to a first clothing item among a plurality of clothing items 30 is input to the first neural network 10, the first neural network 10 may extract feature information f1 corresponding to the first clothing item. For example, the feature information may be represented by a feature vector, but the disclosure is not limited thereto.

The electronic device 100 according to an embodiment may extract, in the same method, feature information corresponding to each of the clothing items 30. For example, second to eighth feature information f2, f3, f4, f5, f6, f7, and f8 respectively corresponding to second to eighth clothing items may be extracted.

The electronic device 100 according to an embodiment may generate candidate coordination sets combining one or more clothing items among the clothing items 30, based on feature information about each of the clothing items 30.

For example, the electronic device 100 may generate a first candidate coordination set by combining an item corresponding to tops, an item corresponding to bottoms, and an item corresponding to socks, among the clothing items 30. Furthermore, a second candidate coordination set may be generated by combining an item corresponding to one-piece dress (top + bottom) and an item corresponding to socks among the clothing items 30. Alternatively, a third candidate coordination set may be generated by combining an item corresponding to tops, for example, a T-shirt, an item corresponding to outerwear, for example, a jacket, and an item corresponding to socks, among the clothing items 30. However, the disclosure is not limited thereto, and the electronic device 100 may generate various candidate coordination sets according to attributes information of the clothing items based on the feature information about the clothing items.

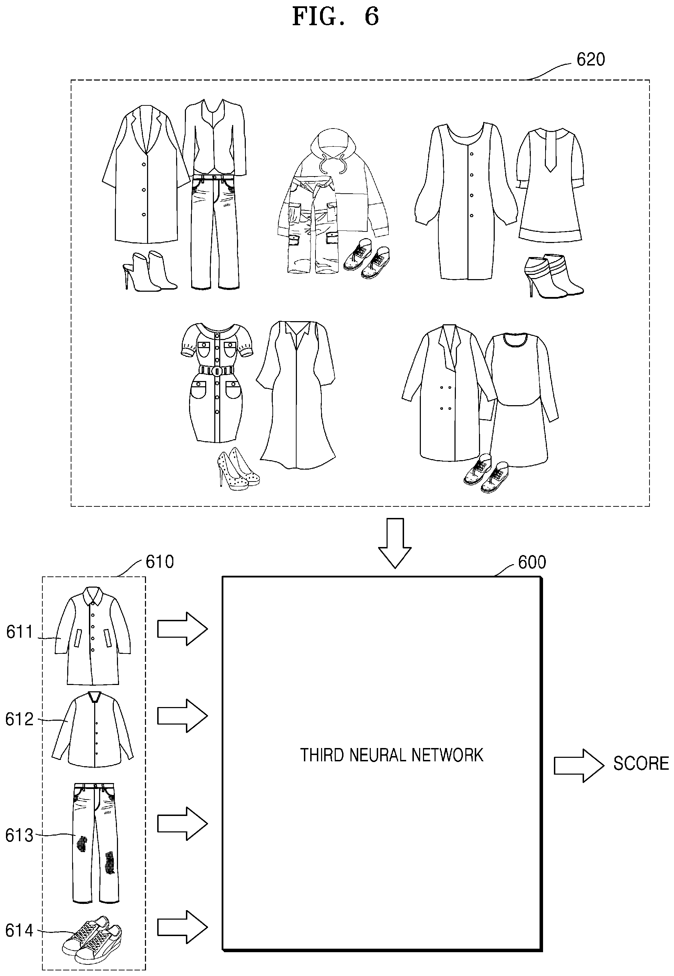

Furthermore, the electronic device 100 according to an embodiment may obtain score information (appropriateness information) about the candidate coordination sets. The score information (appropriateness information) may be information about whether the clothing items included in each of the candidate coordination sets go well with each other. For example, the score information about a candidate coordination set may indicate a higher score as clothing items included in the candidate coordination set go better with each other, but the disclosure is not limited thereto. A method of obtaining score information about the candidate coordination sets is described below in detail with reference to FIG. 6.

Furthermore, the electronic device 100 according to an embodiment may recommend at least one coordination set among the candidate coordination sets, based on the score information about the candidate coordination sets. For example, among the candidate coordination sets, a coordination set with the highest score may be recommended. Alternatively, the candidate coordination sets may be displayed in order of high scores.

The electronic device 100 according to an embodiment may determine a recommended item based on the feature information about each of the clothing items 30 and feature information about a plurality of the recommended coordination sets 40. The recommended coordination sets may include coordination sets recommended by an expert or trendy coordination sets, and may be stored as database in the electronic device 100 or received from an external apparatus.

For example, when a first recommended coordination set 45 is selected among the recommended coordination sets 40 based on a user input, the electronic device 100 may compare the feature information corresponding to each of the clothing items included in the first recommended coordination set 45 with the feature information about each of the clothing items 30 of the user, and determine items similar to the clothing items included in the first recommended coordination set 45, as recommended items. For example, the electronic device 100 may determine a sprite shirt 37, grey cotton pants 35, white sport shoes 36, and a black jacket 31, as recommended items. The electronic device 100 may display the determined recommended items.

Alternatively, the electronic device 100 according to an embodiment may generate candidate coordination sets by combining one or more clothing items among the clothing items 30, and determine score information about candidate coordination sets based on the feature information corresponding to each of the clothing items 30 and feature information about the recommended coordination sets.

Alternatively, the electronic device 100 according to an embodiment may determine a recommended coordination set that is the most similar to the candidate coordination set selected among the candidate coordination sets based on the user input, and display a determined recommended coordination set.

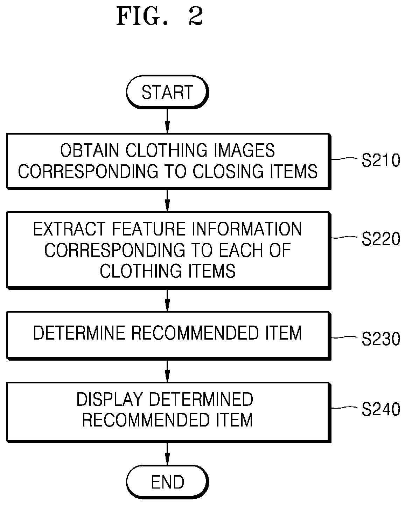

FIG. 2 is a flowchart of an operating method of an electronic device according to an embodiment.

Referring to FIG. 2, the electronic device 100 according to a claimed embodiment obtains a plurality of clothing images corresponding to a plurality of clothing items (S210).

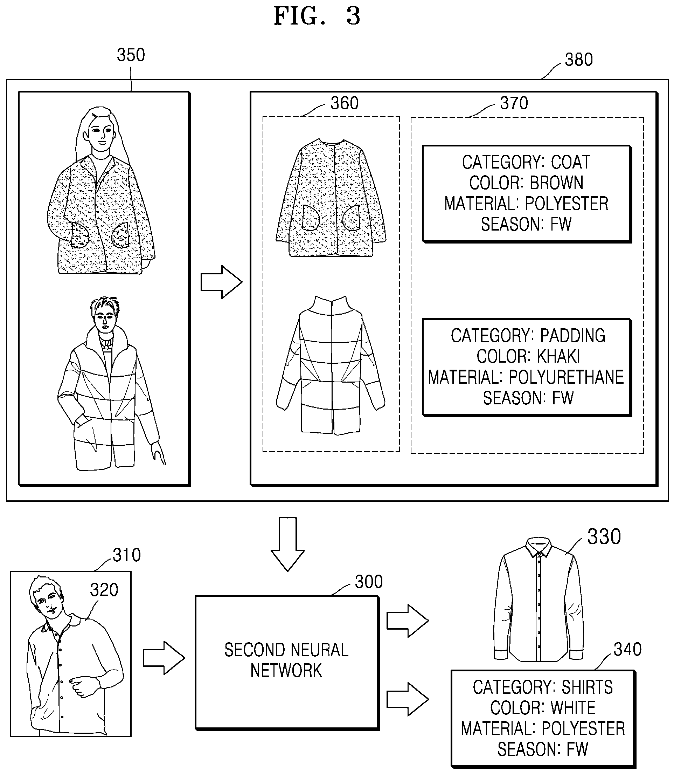

The clothing items according to an embodiment may be clothing items owned by the user. For example, the electronic device 100 may obtain images of the user wearing clothing items, and extract, from user images, clothing images corresponding to the clothing items and meta data. This is described below in detail with reference to FIG. 3.

The electronic device 100 extracts feature information corresponding to each of the clothing items (S220).

For example, the electronic device 100 may extract feature information corresponding to each of the clothing items by using the first neural network 10 of FIG. 1. The feature information according to an embodiment may include attributes information about each of the clothing items, for example, category information, style information, color information, season information, material information, weather information, and the like, about the clothing items, which may be represented by a feature vector, but the disclosure is not limited thereto.

The electronic device 100 determines a recommended item based on the feature information about each of the clothing items (S230).

Specifically, the electronic device 100 generates candidate coordination sets by combining one or more clothing items among the clothing items. The electronic device 100 may obtained score information (appropriateness information) about the candidate coordination sets by inputting the candidate coordination sets to a trained neural network, and may determine any one of the candidate coordination sets, as a recommended item, based on the score information (appropriateness information). A method of obtaining score information about candidate coordination sets is described below in detail with reference to FIG. 6.

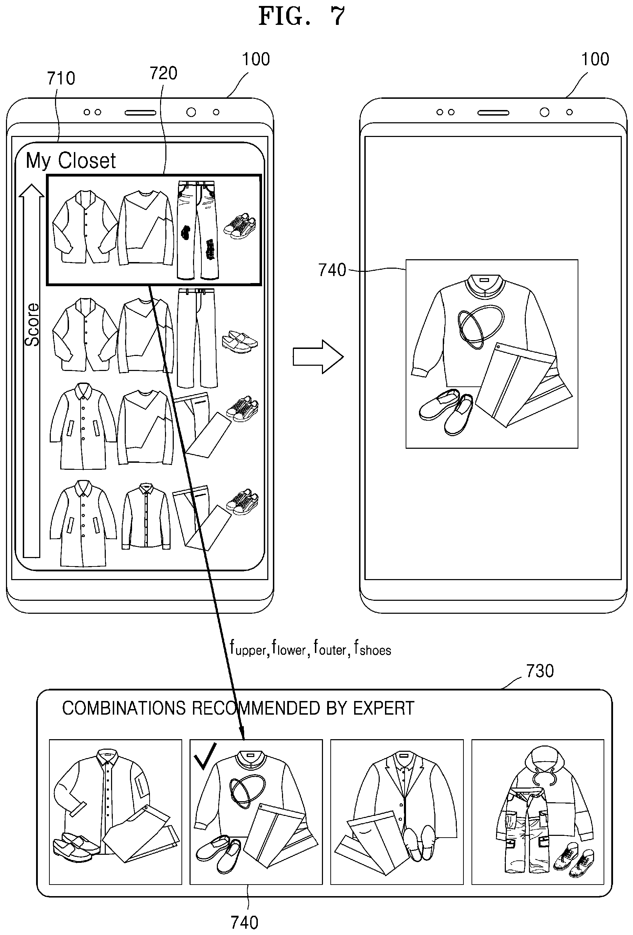

Furthermore, the electronic device 100 may determine a coordination set with the highest score among the candidate coordination sets, as a recommended coordination set, or determine a recommended coordination set based on a clothing item selected by the user, weather information, event information, and the like. This is described below in detail with reference to FIG. 7.

The electronic device 100 may determine a recommended item based on the feature information about each of the clothing items and the feature information about a plurality of recommended coordination sets.

A plurality of recommended coordination sets according to an embodiment ma include coordination sets recommended by an expert or trendy coordination sets, and may be stored in the electronic device 100 as a database or received from an external apparatus. Furthermore, when information about a plurality of recommended coordination sets is updated from an external apparatus, for example, a server, the information about a plurality of recommended coordination sets updated from an external apparatus may be received.

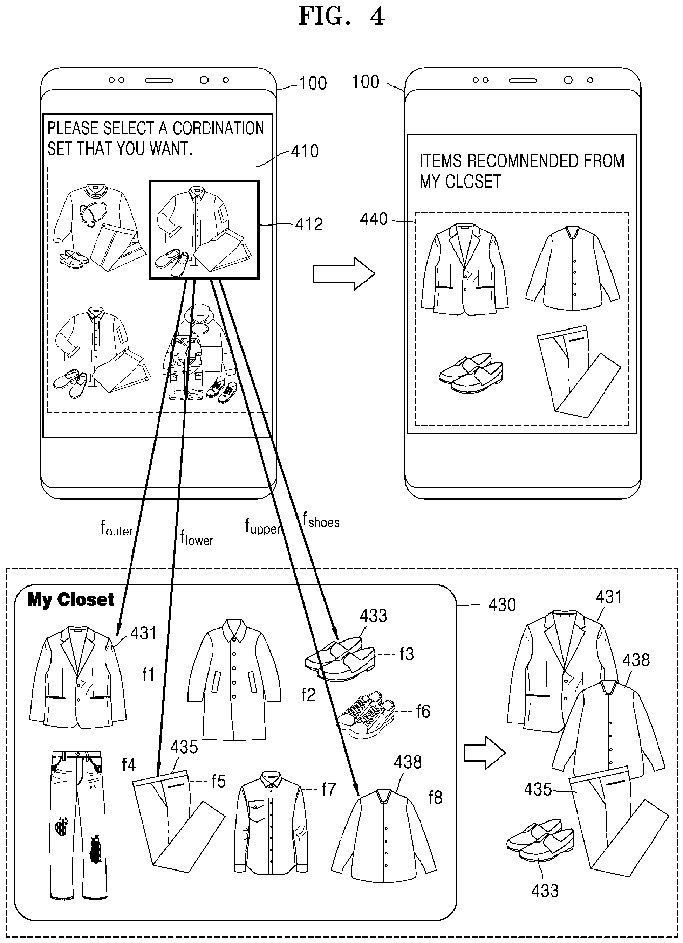

The electronic device 100 may compare the feature information of a recommended coordination set selected by the user from among a plurality of recommended coordination sets with feature information corresponding to each of the clothing items, and determine clothing items that are most similar to the selected recommended coordination set, as recommended items. This is described below in detail with reference to FIG. 4.

Furthermore, the electronic device 100 may transmit a plurality of clothing images corresponding to clothing items or feature information about each of the clothing items, to an external apparatus, for example, a server. The external apparatus may extract feature information from the clothing images, determine a recommended item based on the feature information about each of the clothing items and the feature information about a plurality of recommended coordination sets, and transmit information about the recommended item to the electronic device 100.

Furthermore, the electronic device 100 may compare the feature information of items included in a coordination set selected by the user from among the candidate coordination sets by combining one or more clothing items among the clothing items with the feature information about the recommended coordination sets, and determine a recommended coordination set that is the most similar to the selected coordination set.

Alternatively, the electronic device 100 may determine clothing items that may constitute the most appropriate coordination set, when combined with the clothing item selected by the user, as recommended items, based on the feature information of a clothing item selected by the user from among the clothing items and feature information about the recommended coordination sets.

The electronic device 100 according displays a determined recommended item (S240).

When the clothing item selected by the user is included in the recommended coordination set, the electronic device 100 may display the clothing item selected by the user to be distinctive from the clothing item recommended by the electronic device 100.

FIG. 3 is a reference view of a method of extracting, by the electronic device 100 according to an embodiment, a clothing image and meta data corresponding to a clothing item.

Referring to FIG. 3, the electronic device 100 according to an embodiment may include a user image 310 including a clothing item 320. For example, the electronic device 100 may obtain the user image 310 by capturing an image of the user wearing the clothing item 320 by using a camera or an image by capturing an image of a clothing item hanging on a hanger. Alternatively, an image including a clothing item may be received from an external apparatus. However, the disclosure is not limited thereto.

The electronic device 100 according to an embodiment may extract a clothing image 330 and meta data 340 corresponding to the clothing item 320 by using the user image 310 and a second neural network 300. According to an embodiment, the second neural network 300 may be a neural network trained by a training data set 380 including an image including clothing items 350, clothing images 360, and meta data 370. For example, the second neural network 300 may be trained in a direction in which a weighted sum of a difference (first difference) between a clothing image extracted from an image including a clothing item that is included in the training data set 380 and a clothing image included in the training data set 380 and a difference (second difference) between meta information of the clothing image extracted from an image including a clothing item that is included in the training data set 380 and meta information of the clothing image included in the training data set 380 decreases, but the disclosure is not limited thereto.

Accordingly, when the user image 310 in which the user wears the clothing item 320 is input to the second neural network 300 that is trained as above, the second neural network 300 may output the first clothing image 330 corresponding to the clothing item 320 and the meta data 340. In this state, the clothing image 330 may be generated by extracting only a clothing area from the user image 310 and standardizing an extracted clothing area.

The second neural network 300 according to an embodiment may be a generative adversarial network (GAN) including a generator network (generator) for generating a clothing image from an input user image and a discriminator network (discriminator) for discriminating whether a generated clothing image is real or fake. In this state, the generator network may be trained to generate a clothing image having meta data (attributes information) corresponding to the clothing item extracted from the user image.

Furthermore, the meta data corresponding to the clothing item may include at least one of category information, style information, color information, season information, material information, weather information, or user preference information regarding about the clothing item. For example, the meta data 340 may include information indicating that the clothing item 320 is categorized into tops or shirts, the color of the clothing item 320 is white, the material of the clothing item 320 is polyester, or season information of the clothing item 320 is fall or winter (FW). Furthermore, by including history information about wearing of a clothing item by the user into training data, user preference information corresponding to the clothing item may be trained together as meta data. However, the disclosure is not limited thereto.

FIG. 4 is a reference view of a method of determining, by the electronic device 100 according to an embodiment, a recommended item among a plurality of clothing items.

Referring to FIG. 4, the electronic device 100 according to an embodiment may display a plurality of recommended coordination sets 410. The recommended coordination sets 410 may be stored in the electronic device 100, as a database, or received from an external apparatus, the disclosure is not limited thereto.

The electronic device 100 may receive an input from the user to select any one of the recommended coordination sets 410. When any one of the recommended coordination sets 410 is selected, the electronic device 100 may determine one or more recommended items based on the selected coordination set.

The electronic device 100 according to an embodiment may extract and previously store feature information corresponding to a plurality of clothing items by using the method described in FIG. 3. When a second recommended coordination set 412 is selected from among first to fourth recommended coordination sets based on the user input, the electronic device 100 may compare the feature information of items included in the second recommended coordination set 412 with feature information corresponding to a plurality of clothing items 430, and determine one or more recommended items. As illustrated in FIG. 4, the electronic device 100 may determine clothing items that are most similar to the feature information of each of the items included in the selected coordination set, as recommended items. For example, a clothing item, for example, a white shirt 438, having feature information that is the most similar to feature information fᵤₚₚₑᵣ of a first clothing item, for example, tops, included in the second recommended coordination set 412 may be determined. Furthermore, a clothing item, for example, a black jacket 431, having feature information that is the most similar to feature information fₒᵤₜₑᵣ of a second clothing item, for example, outerwear, included in the second recommended coordination set 412 may be determined. Furthermore, a clothing item, for example, white pants 435, having feature information that is the most similar to feature information f_{lower} of a third clothing item, for example, bottoms, included in the second recommended coordination set 412 may be determined, and a clothing item, for example, black dress shoes 433, having feature information that is the most similar to feature information fₛₕₒₑₛ of a fourth clothing item, for example, shoes, included in the second recommended coordination set 412 may be determined.

The electronic device 100 may display determined one or more recommended items 440. For example, the electronic device 100 may display the recommended items separately or in combination.

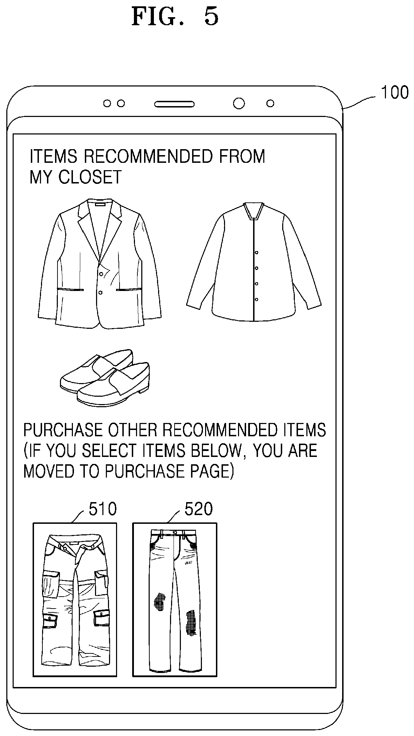

FIG. 5 is a view of an interface screen displayed on an electronic device according to an embodiment.

The electronic device 100 according to an embodiment may display objects 510 and 520 which enable the user to connect to Internet shopping malls selling similar clothing items, when there is no clothing item having a similarity over a preset value with respect to the clothing item, for example, bottoms, included in the recommended coordination set selected by the user, for example, the second recommended coordination set 412 of FIG. 4 among the clothing items (clothing items owned by the user).

Alternatively, the user may be moved to an Internet shopping mall selling additional clothing items that go well with the recommended items. For example, when the second recommended coordination set does not include a clothing item corresponding to a bag, the electronic device 100 may display an object which enables the user to connect to an Internet shopping mall selling bags that go well with the recommended items. However, the disclosure is not limited thereto.

FIG. 6 is a reference view of a method of evaluating, by the electronic device 100 according to an embodiment, the appropriateness of a combination of a plurality of clothing items.

Referring to FIG. 6, the electronic device 100 according to an embodiment may obtain a plurality of clothing items. The clothing items may include clothing items that the user actually owns, and as a method of obtaining a plurality of clothing items is described in detail in FIG. 2 and 3, a detailed description thereof is omitted.

The electronic device 100 according to an embodiment may generate candidate coordination sets by combining one or more clothing items among the clothing items.

For example, the electronic device 100 may generate a first candidate coordination set by combining an item corresponding to tops, an item corresponding to bottoms, and an item corresponding to socks among the clothing items. Furthermore, a second candidate coordination set may be generated by combining an item corresponding to one-piece dress (tops+bottoms) and an item corresponding to socks among the clothing items. Alternatively, a third candidate coordination set may be generated by combining an item corresponding to tops, for example, a T-shirt, an item corresponding to outerwear, for example, a jacket, and an item corresponding to socks, among the clothing items. However, the disclosure is not limited thereto, and the electronic device 100 may generate various candidate coordination sets according to attributes information of the clothing items, based on the feature information of the clothing items.

Furthermore, when the user adds a new clothing item, the electronic device 100 may additionally generate candidate coordination sets according to the newly added clothing item.

Furthermore, the electronic device 100 may transmit the clothing items to an external apparatus, for example, a server, and the external apparatus may generate various candidate coordination sets and transmit the generated candidate coordination sets to the electronic device 100. In this case, when the user adds a new clothing item, the electronic device 100 may transmit information about the new clothing item to the external apparatus, and the external apparatus may generate candidate coordination sets according to the newly added clothing item and transmit the generated candidate coordination sets to the electronic device 100.

As illustrated in FIG. 6, one candidate coordination set 610 may include one each of a clothing item 611 corresponding to outerwear, a clothing item 612 corresponding to tops, a clothing item 613 corresponding to bottoms, and a clothing item 614 corresponding to shoes.

The electronic device 100 according to a claimed embodiment obtains appropriateness information about a candidate coordination set by using a third neural network 600. The appropriateness information may be information about whether clothing items included in each of the candidate coordination sets go well with each other. For example, the appropriateness information about a candidate coordination set may be represented by a score, and may indicate a higher score as clothing items included in the candidate coordination set go better with each other. However, the disclosure is not limited thereto.

The third neural network 600 according to an embodiment is a neural network trained by a plurality of recommended coordination sets 620 and appropriateness information corresponding to the recommended coordination sets 620. The third neural network 600 trains a combination of clothing items that go well with each other, by training colors, patterns, styles, and the like of clothing items included in the coordination sets recommended by an expert.

When one or more clothing items (611, 612, 613, 614, clothing images) included in the candidate coordination set 610 are input to the third neural network 600 that is trained, the third neural network 600 outputs appropriateness information about the candidate coordination set 610, as a score. For example, the third neural network 600 may output a score of the candidate coordination set 610 that is input, and output a higher score as a combination of one or more clothing items included in the candidate coordination set 610 goes well with each other. However, the disclosure is not limited thereto.

FIG. 7 is a reference view of a method of determining, by the electronic device 100 according to an embodiment, a recommended item based on candidate coordination sets.

Referring to FIG. 7, the electronic device 100 according to an embodiment may display a plurality of candidate coordination sets 710 based on score information. For example, the electronic device 100 may generate a plurality of candidate coordination sets by combining one or more items among a plurality of clothing items. Furthermore, the electronic device 100 may determine a score of each of a plurality of candidate coordination sets by using the third neural network 600 by the method of FIG. 6. However, the disclosure is not limited thereto.

The electronic device 100 according to an embodiment may display candidate coordination sets having scores greater than or equal to a preset value among the candidate coordination sets, and display the candidate coordination sets 710 in order of high scores. However, the disclosure is not limited thereto.

The electronic device 100 according to an embodiment may determine the candidate coordination set with the highest score among the candidate coordination sets, as a recommended coordination set.

Alternatively, when receiving an input from the user to select any one of a plurality of clothing items, the electronic device 100 may determine the candidate coordination set with the highest score among the candidate coordination sets including the clothing item selected by the user, as a recommended coordination set.

Alternatively, the electronic device 100 may determine the candidate coordination set with the highest score among the candidate coordination sets, which is appropriate for weather information or information about an event in which the user participates, as a recommended coordination set, based on the weather information, the event information, and the like. However, the disclosure is not limited thereto.

Furthermore, the electronic device 100 may receive an input from the user to select any one of the candidate coordination sets 710 that are displayed. When any one of the candidate coordination sets 710 is selected, the electronic device 100 may determine a recommended coordination set corresponding to a selected coordination set.

Recommended coordination sets 730 according to an embodiment may include coordination sets recommended by an expert or trendy coordination sets, and may be stored in the electronic device 100 as a database, or received from an external apparatus.

The electronic device 100 according to an embodiment may extract feature information (fᵤₚₚₑᵣ, f_{lower}, fₒᵤₜₑᵣ, and fₛₕₒₑₛ) of items included in a first coordination set 720 selected by the user. The electronic device 100 may compare the feature information of the items included in the first coordination set 720 with feature information of clothing items included in each of a plurality of recommended coordination sets, and determine the most similar recommended coordination set.

For example, as illustrated in FIG. 7, the first coordination set 720 may include first to fourth clothing items. The electronic device 100 may compare the feature information fᵤₚₚₑᵣ of the first clothing item with feature information of a clothing item corresponding to tops included in each of the recommended coordination sets, and compare the feature information f_{lower} of the second clothing item with feature information of a clothing item corresponding to bottoms included in each of the recommended coordination sets. Furthermore, the electronic device 100 may compare the feature information fₒᵤₜₑᵣ of the third clothing item with feature information of a clothing item corresponding to outwear included in each of the recommended coordination sets, and compare the feature information fₛₕₒₑₛ of the fourth clothing item with feature information of a clothing item corresponding to shoes included in each of the recommended coordination sets.

As a result of the comparison, the electronic device 100 may determine a second recommended coordination set 740 among the recommended coordination sets 730, as one that is the most similar to the first coordination set 720. The electronic device 100 may display the second recommended coordination set 740 that is determined. Accordingly, the user may easily recognize overall feeing about the first coordination set 720 selected by the user, through the second recommended coordination set 740 that is displayed.

Furthermore, the electronic device 100 may display an interface providing a shopping mall pages where a plurality of clothing items included in the second recommended coordination set 740 may be purchased, but the disclosure is not limited thereto.

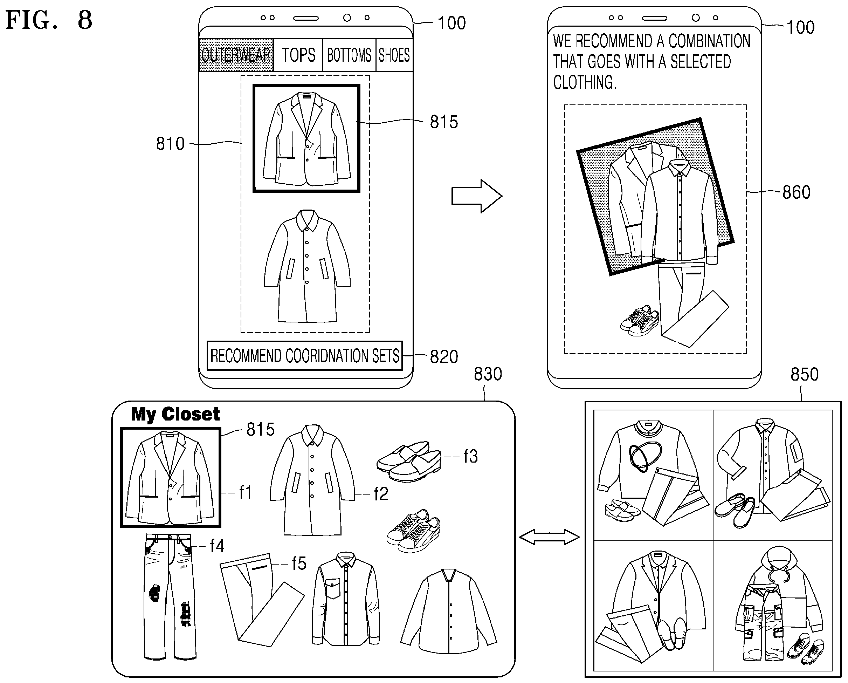

FIG. 8 is a reference view of a method of determining, by the electronic device 100 according to an embodiment, a recommended item among a plurality of clothing items.

Referring to FIG. 8, the electronic device 100 may display a plurality of clothing items (clothing items owned by a user). As the method of obtaining a plurality of clothing items is described in FIG. 2 and 3, a detailed description thereof is omitted.

Furthermore, the electronic device 100 may display a plurality of clothing items by categories. For example, as illustrated in FIG. 8, a plurality of clothing items may be classified into categories of outerwear, tops, bottoms, and shoes, and display together items classified into the same category. However, the disclosure is not limited thereto.

The electronic device 100 may receive an input to select any one of a plurality of clothing items 810 that are displayed. Furthermore, the electronic device 100 may receive the user input to request a coordination set recommendation including a selected clothing item 815. For example, the electronic device 100 may display a coordination set recommendation object 820, and when selecting a clothing item is completed, the user may request a coordination set recommendation with an input of selecting the coordination set recommendation object 820.

When a coordination set recommendation is requested, the electronic device 100 may determine recommended items based on the selected clothing item 815 and a plurality of recommended coordination sets 850.

For example, the electronic device 100 may determine a recommended coordination set including clothing items having feature information that is the most similar to feature information of one or more clothing items (the selected clothing item 815, for example, a black jacket) selected by the user from among the recommended coordination sets 850. The electronic device 100 may determine clothing items having feature information that is the most similar to feature information of the other clothing items included in the recommended coordination set among a plurality of clothing items 830, as recommended items.

Alternatively, the electronic device 100 may determine clothing items that, when being combined with the item selected by the user, constitute the most appropriate coordination set, as recommended items, by using a neural network trained based on the recommended coordination sets 850.

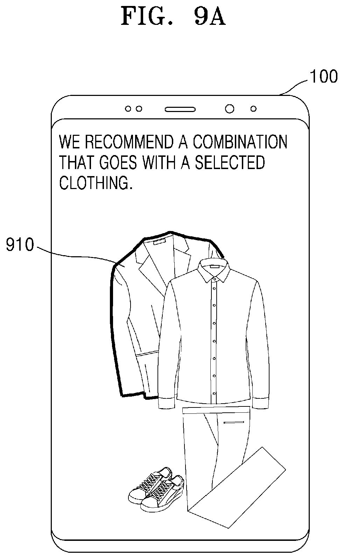

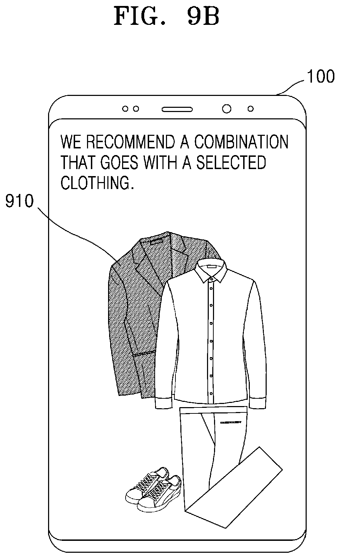

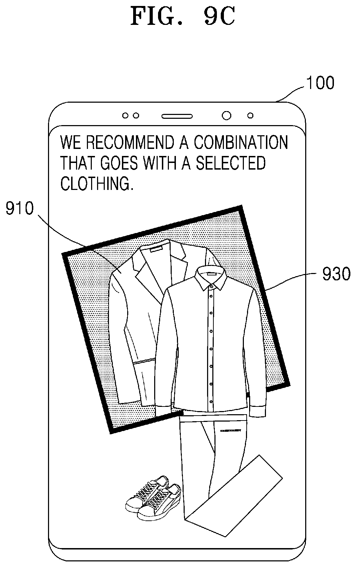

The electronic device 100 according to an embodiment may display a coordination set 860 obtained by combing the clothing item selected by the user and the recommended clothing items. In this state, the electronic device 100 may display the clothing item selected by the user to be distinctive from the recommended clothing items. This is described below in detail with reference to FIG. 9.

FIGS. 9A to 9C are views of screens on which the electronic device 100 according to an embodiment displays a recommended coordination set.

Referring to FIGS. 9A to 9C, the electronic device 100 according to an embodiment may display a clothing item selected by the user from among a plurality of clothing items included in the recommended coordination sets, to be distinctive from the clothing item recommended by the electronic device 100.

For example, as illustrated in FIG. 9A, the electronic device 100 may display an image 910 of the clothing item selected by the user, in a bold outline. Alternatively, as illustrated in FIG. 9B, the electronic device 100 may display the image 910 of the clothing item selected by the user by highlighting the same. Alternatively, the electronic device 100 may display the highlighted clothing item image to periodically flicker.

Alternatively, as illustrated in FIG. 9C, the electronic device 100 may display a bounding box 930 including the image 910 of the clothing item selected by the user.

However, the above-described embodiments are merely examples, and the selected clothing item and the recommended clothing item may be displayed in various methods to be distinctive from each other.

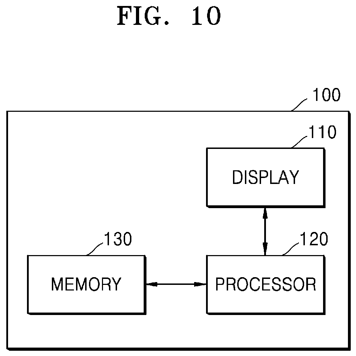

FIG. 10 is a block diagram of a configuration of an electronic device according to an embodiment.

Referring to FIG. 10, the electronic device 100 according to an embodiment may include a display 110, a memory 130, and a processor 120.

The processor 120 according to an embodiment may generally control the electronic device 100. The processor 120 may execute one or more programs stored in the memory 130.

The memory 130 according to an embodiment may store various data, programs, or applications to drive and control the electronic device 100. Furthermore, the memory 130 may store a plurality of clothing images corresponding to clothing items and meta data to match each other. Furthermore, the memory 130 may store a database with a plurality of recommended coordination sets including coordination sets recommended by an expert or trendy coordination sets.

Furthermore, the memory 130 according to an embodiment may store at least one of a first neural network for extracting feature information from a clothing image, a second neural network for extracting a clothing image and meta data from an image of a user wearing a clothing item, or a third neural network for evaluating appropriateness, for example, determining a score, of a combination of one or more clothing items.

The program stored in the memory 130 may include one or more instructions. The program (one or more instructions) or application stored in the memory 130 may be executed by the processor 120.

The processor 120 according to an embodiment may obtain images of a user wearing clothing items, and extract clothing images corresponding to clothing items and meta data from the user images by using the second neural network. Furthermore, the processor 120 may extract feature information corresponding to clothing items from a plurality of clothing images by using the first neural network.

The processor 120 may determine a recommended item based on the feature information about each of the clothing items and the feature information about a plurality of recommended coordination sets. The processor 120 may compare the feature information of a recommended coordination set selected by the user from among a plurality of recommended coordination sets with feature information corresponding to each of the clothing items, and determine clothing items that is the most similar to the selected recommended coordination set, as recommended items.

The processor 120 may generate candidate coordination sets by combining one or more items among a plurality of clothing items. Furthermore, the processor 120 may evaluate appropriateness of each of the generated candidate coordination sets, by using the third neural network trained by a plurality of recommended coordination sets. Furthermore, the processor 120 may compare the feature information of items included in a coordination set selected by the user from among the candidate coordination sets with the feature information about the recommended coordination sets, and determine a recommended coordination set that is the most similar to the selected coordination set.

Alternatively, the processor 120 based on feature information of a clothing item selected by the user from among the clothing items and feature information about the recommended coordination sets, when combined with the clothing item selected by the user clothing items that may constitute the most appropriate coordination set as recommended items.

The display 110 according to an embodiment may generate a driving signal by converting an image signal, a data signal, an OSD signal, a control signal, and the like which are processed by the processor 120. The display 110 may be implemented by a PDP, an LCD, an OLED, a flexible display, and the like, and furthermore, by a three-dimensional (3D) display. Furthermore, the display 110 may be provided as a touch screen so as to be used not only as an output device, but also as an input device.

The display 110 according to an embodiment may display a determined recommended item. Furthermore, the display 110 may display a recommended coordination set, and when the recommended coordination set includes a clothing item selected by the user, and display the clothing item selected by the user to be distinctive from a recommended clothing item.

The block diagram of the electronic device 100 of FIG. 10 is a block diagram for an embodiment. Each constituent element of the block diagram may be integrated, added, or omitted according to the specifications of the electronic device 100 that is actually implemented. In other words, as necessary, two or more constituent elements may be incorporated into one constituent element, or one constituent element may be separated into two or more constituent elements. Furthermore, the function performed by each block is presented for explanation of embodiments, and a detailed operation or device does not limit the scope of rights of the disclosure.

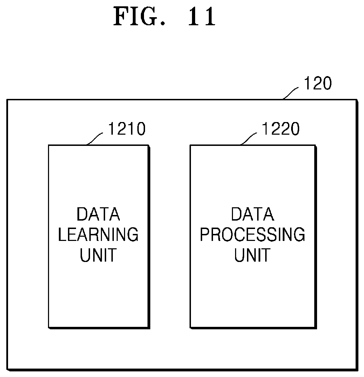

FIG. 11 is a block diagram of a configuration of the processor 120 according to an embodiment.

Referring to FIG. 11, the processor 120 according to an embodiment may include a data learning unit 1210 and a data processing unit 1220.

The data learning unit 1210 may learn a reference to obtain feature information corresponding to a clothing item from clothing images to train the first neural network according to an embodiment. The data learning unit 1210 may learn a reference regarding which information of a clothing image is used to obtain the feature information. Furthermore, the data learning unit 1210 may learn a reference regarding how to obtain the feature information corresponding to the clothing item, by using the clothing image. The data learning unit 1210 may learn the reference to obtain feature information from an image by obtaining data, for example, the clothing image, to be used for learning, and applying the obtained data to a data processing model (first neural network).

Furthermore, the data learning unit 1210 may learn a reference to obtain the clothing image and meta data from an image of a user wearing a clothing item, to train the second neural network according to an embodiment. The data learning unit 1210 may learn a reference regarding which information of a user image is used to obtain the clothing image and meta data. Furthermore, the data learning unit 1210 may learn a reference how to obtain the clothing image and meta data, by using the user image. The data learning unit 1210 may learn the reference to obtain the clothing image and meta data from the user image by obtaining data, for example, the user image, to be used for learning, and applying the obtained data to a data processing model (second neural network).

Furthermore, the data learning unit 1210 may learn a reference for evaluating appropriateness (determining a score) of a combination of clothing items, to train the third neural network according to an embodiment. The data learning unit 1210 may learn a reference regarding how to determine a score of the combination of clothing items. The data learning unit 1210 may learn the reference for determining a score of the combination of clothing items by obtaining data, for example, a combination of clothing items, to be used for learning, and applying the obtained data to a data processing model (third neural network).

The data processing models, for example, the first to third neural networks, may be established considering applied fields of a data processing model, the purpose of learning or the computing performance of a device, and the like. The data processing models may be, for example, neural network based models. For example, models such as a deep neural network (DNN), a recurrent neural network (RNN), or a bidirectional recurrent deep neural network (BRDNN) may be used as the data processing models, the disclosure is not limited thereto.

Furthermore, the data learning unit 1210 may train data processing models by using a learning algorithm including, for example, error back-propagation or gradient descent, and the like.

Furthermore, the data learning unit 1210 may train a data processing model, for example, through supervised learning using training data as an input value. Furthermore, the data learning unit 1210 may train a data processing model, for example, through unsupervised learning discovering a reference for data processing by learning on its own a type of data needed for data processing without any supervising. Furthermore, the data learning unit 1210 may train a data processing model, for example, through reinforcement using a feedback about whether a result value according to learning.

Furthermore, when the data processing model is trained, the data learning unit 1210 may store the trained data processing model. In this case, the data learning unit 1210 may store the trained data processing models in a memory of an electronic device. Alternatively, the data learning unit 1210 may store the trained data processing model in a memory of a server connected to an electronic device via a wired or wireless network.

In this case, for example, instructions or data related to at least one of other constituent elements of the electronic device may be stored together in the memory where the trained data processing model is stored. Furthermore, the memory may store software and/or programs. The programs may include, for example, kernels, middleware, application programming interfaces (API) and/or application programs or "applications", and the like.

The data processing unit 1220 may input a clothing image corresponding to the clothing item to a data processing model including the trained first neural network, and the data processing model may output, as a result value, the feature information corresponding to the clothing item. The output result value may be used to update the data processing model including the first neural network.

The data processing unit 1220 may input an image of a user wearing a clothing item to the data processing model including the trained second neural network, and the data processing model may output, as a result value, a clothing image corresponding to the clothing item and meta data. The output result value may be used to update the data processing model including the second neural network.

The data processing unit 1220 may input a combination of clothing items to the data processing model including the trained third neural network, and the data processing model may output, as a result value, a score of the combination of clothing items. The output result value may be used to update the data processing model including the third neural network.

At least one of the data learning unit 1210 and the data processing unit 1220 may be manufactured in the form of at least one hardware chip and mounted on an image display device. For example, at least one of the data learning unit 1210 or the data processing unit 1220 may be manufactured in the form of a hardware chip dedicated for artificial intelligence (AI), or manufactured as a part of an existing general purpose processor, for example, a CPU or an application processor, or a graphics dedicated processor, for example, a GPU, and mounted on the above-described various electronic devices.

In this case, the data learning unit 1210 and the data processing unit 1220 may be mounted on one electronic device or on each of separate electronic devices. For example, one of the data learning unit 1210 and the data processing unit 1220 may be included in an electronic device, and the other may be included in one server. Furthermore, the data learning unit 1210 and the data processing unit 1220 may provide, in a wired or wireless method, model information established by the data learning unit 1210 to the data processing unit 1220, and provide data input to the data processing unit 1220 to the data learning unit 1210, as additional training data.

At least one of the data learning unit 1210 or the data processing unit 1220 may be implemented by a software module. When at least one of the data learning unit 1210 or the data processing unit 1220 is implemented by a software module or a program module including instructions, the software module may be stored in a non-transitory computer-readable medium. Furthermore, in this case, at least one software module may be provided by an operating system (OS) or by a certain application. Alternatively, part of at least one software module may be provided by an OS, and the other may be provided by a certain application.

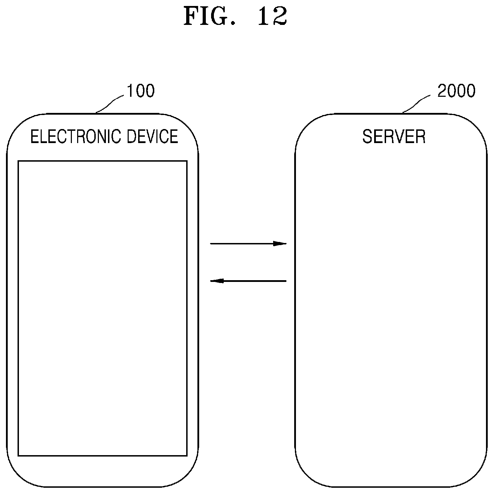

FIG. 12 is a view of an example in which the electronic device 100 and a server 2000 are in association with each other to learn and recognize data, according to an embodiment.

Referring to FIG. 12, the server 2000 may train the first neural network by learning the reference to obtain feature information from a clothing image. Furthermore, the server 2000 may train the second neural network by learning the reference to obtain a clothing image corresponding to a clothing item and meta data from an image of a user wearing the clothing item. The server 2000 may train the third neural network by learning the reference to determine scores of one or more combinations of clothing items. The electronic device 100 may extract the clothing image and meta data from the user image, extract feature information from clothing image, and determine scores of one or more combinations of clothing items, based on a training result by the server 2000.

In this case, the server 2000 may perform the function of the data learning unit 1210 of FIG. 11. The server 2000 may learn the reference regarding which information of a clothing image is used to obtain feature information, the reference regarding which information of a user image is used to obtain a clothing image and meta data, and the reference regarding how to determine a score of a combination of clothing items.

Furthermore, the server 2000 may learn by using a data processing model (first neural network) used to obtain feature information of a clothing item, a data processing model (second neural network) used to obtain a clothing image and meta data from a user image, and a data processing model (third neural network) used to determine a score of a combination of clothing items.

Furthermore, the electronic device 100 may transmit data to the server 2000, and request the server 2000 to process the data by applying the data to the data processing models (first to third neural networks). For example, the server 2000 may obtain feature information from a clothing image, obtain a clothing image and meta data from a user image, and determine a score of a combination of clothing items, by using the data processing models (first to third neural networks).

Alternatively, the electronic device 100 may receive the data processing models generated by the server 2000 from the server 2000, and process data by using the received data processing models. For example, the electronic device 100 may obtain feature information from a clothing image, obtain a clothing image and meta data from a user image, and determine a score of a combination of clothing items, by using the received data processing models (first to third neural networks).

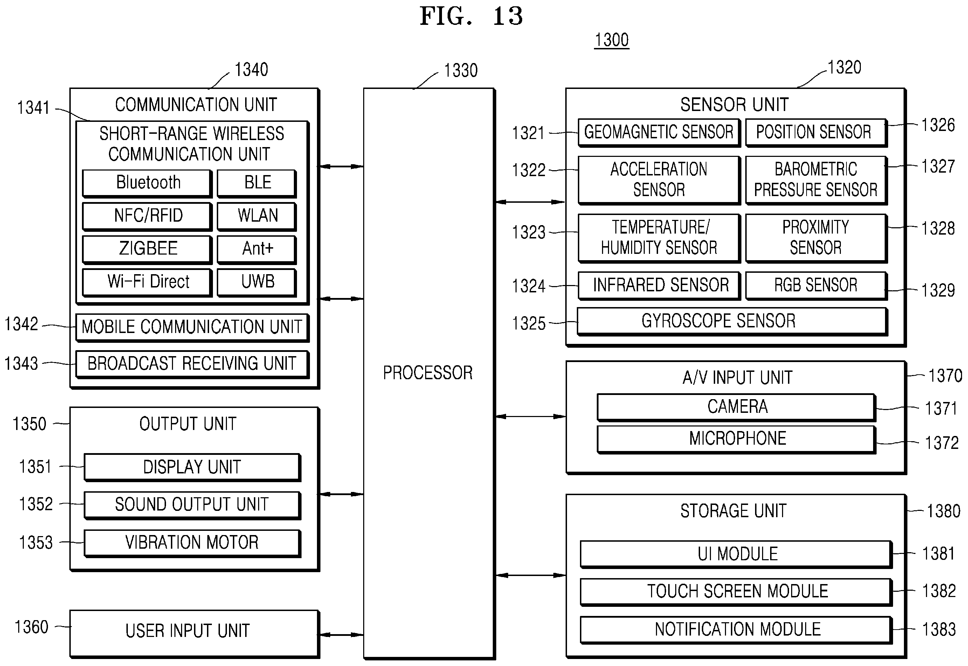

FIG. 13 is a block diagram of a configuration of an electronic device 1300 according to another embodiment. The electronic device 1300 of FIG. 13 may be an embodiment of the electronic device 100 of FIG. 1.

Referring to FIG. 13, the electronic device 1300 according to an embodiment may include a processor 1330, a sensor unit 1320, a communication unit 1340, an output unit 1350, a user input unit 1360, an audio/video (A/V) input unit 1370, and a storage unit 1380.

The processor 1330, the storage unit 1380, and a display unit 1351 of FIG. 13 may correspond to the processor 120, the memory 130, and the display 110 of FIG. 10, respectively. The same descriptions as those presented in FIG. 10 are omitted in FIG. 13.

The communication unit 1340 may include one or more constituent elements to perform a communication between the electronic device 1300 and an external apparatus or server. For example, the communication unit 1340 may include a short-range wireless communication unit 1341, a mobile communication unit 1342, and a broadcast receiving unit 1343.

The short-range wireless communication unit 1341 may include a Bluetooth communication unit, a near field communication unit, a WLAN (Wi-Fi) communication unit, a Zigbee communication unit, an infrared data association (IrDA) communication unit, a Wi-Fi direct (WFD) communication unit, an ultra-wideband (UWB) communication unit, an Ant+ communication unit, and the like, but the disclosure is not limited thereto.

The mobile communication unit 1342 may transmit/receive a wireless signal with respect to at least one of a base station, an external terminal, or a server on a mobile communication network. The wireless signal may include a voice call signal, a video call signal, or various types of data according to transmission/receiving of a text/multimedia message.

The broadcast receiving unit 1343 may externally receive a broadcast signal and/or broadcast related information through a broadcast channel. The broadcast channel may include a satellite channel and a terrestrial channel. In some embodiments, the electronic device 1300 may not include the broadcast receiving unit 1343.

The output unit 1350 for outputting an audio signal, a video signal, or a vibration signal, may include the display unit 1351, a sound output unit 1352, a vibration motor 1353, and the like.

The sound output unit 1352 may output audio data received from the communication unit 1340 or stored in the storage unit 1380. Furthermore, the sound output unit 1352 may output a sound signal related to a function performed in the electronic device 1300, for example, call signal receiving sound, message receiving sound, or notification sound. The sound output unit 1352 may include a speaker, a buzzer, and the like.

The vibration motor 1353 may output a vibration signal. For example, the vibration motor 1353 may output a vibration signal corresponding to the output of audio data or video data, for example, call signal receiving sound, message receiving sound, and the like. Furthermore, the vibration motor 1353 may output a vibration signal when a touch is input to a touchscreen.

The processor 1330 may control an overall operation of the electronic device 1300. For example, the processor 1330 may control, by executing the programs stored in the storage unit 1380, the communication unit 1340, the output unit 1350, the user input unit 1360, the sensing unit 1320, the A/V input unit 1370, and the like.

The user input unit 1360 may mean a device to input, by a user, data to control the electronic device 1300. For example, the user input unit 1360 may include a key pad, a dome switch, a touch pad (a contact type capacitance method, a pressure type resistance film method, an infrared detection method, a surface ultrasound conduction method, an integral tension measurement method, a piezo effect method, and the like), a jog wheel, a jog switch, and the like, but the disclosure is not limited thereto.

The sensor unit 1320 may include not only a sensor for sensing user's biological information, for example, a fingerprint recognition sensor, and the like, but also a sensor for sending a state of the electronic device 1300 or a state around the electronic device 1300. Furthermore, the sensor unit 1320 may transmit information detected by a sensor to the processor 1320.

The sensor unit 1320 may include at least one of a geomagnetic sensor 1321, an acceleration sensor 1322, a temperature/humidity sensor 1323, an infrared sensor 1324, a gyroscope sensor 1325, a position sensor 1326, for example, a GPS, a barometric pressure sensor 1327, a proximity sensor 1328, and an RGB sensor (illuminance sensor) 1329, but the disclosure is not limited thereto. As the function of each sensor may be intuitively inferred by a person skilled in the art from the name thereof, detailed descriptions thereof are omitted.

The A/V input unit 1370 for inputting an audio signal or a video signal may include a camera 1371, a microphone 1372, and the like. The camera 1371 may obtain an image frame such as a still image or a video, and the like from a video call mode or a photography mode. An image captured through an image sensor may be processed through the processor 1330 or a separate image processing unit (not shown).

An image frame processed by the camera 1371 may be stored in the storage unit 1380 or transmitted to the outside through the communication unit 1340. The camera 1371 may include two or more cameras according to a configuration type of the electronic device 1300.

The microphone 1372 may process a receive input of an external sound signal to electrical sound data. For example, the microphone 1372 may receive a sound signal from an external device or speaker. The microphone 1372 may use various noise removal algorithms to remove noise generated in the process of receiving an external sound signal.

The storage unit 1380 may store a program for processing and controlling the processor 1330, and pieces of input/output data.

The storage unit 1380 may include a storage medium of at least one type of a flash memory type, a hard disk type, a multimedia card micro type, a card type memory, for example, SD or XD memory, and the like, random access memory (RAM) static random access memory (SRAM), read-only memory (ROM), electrically erasable programmable read-only memory (EEPROM), programmable read-only memory (PROM), magnetic memory, a magnetic disc, an optical disc, or the like. Furthermore, the electronic device 1300 may operate a web storage or a cloud server that perform a storing function of the storage unit 1380 on the Internet.

The programs stored in the storage unit 1380 may be classified into a plurality of modules according to a function thereof, for example, a UI module 1381, a touch screen module 1382, a notification module 1383, and the like.

The UI module 1381 may provide UI, GUI, and the like, which are specialized in association with the electronic device 1300 for each application. The touch screen module 1382 may detect a touch gesture by a user on a touch screen, and transmit information about the touch gesture to the processor 1330.

The touch screen module 1382 may recognize and analyze a touch code. The touch screen module 1382 may be configured by separate hardware including a controller.

The notification module 1383 may generate a signal to notify an occurrence of an event of the electronic device 1300. Examples of an event occurring in the electronic device 1300 may include call signal receiving, message receiving, key signal input, schedule notification, and the like. The notification module 1383 may output a notification signal in the form of a video signal through the display unit 1351, an audio signal through the sound output unit 1352, or a vibration signal through the vibration motor 1353.

The block diagram of the electronic device 1300 of FIG. 13 is a block diagram for an embodiment. Each constituent element of the block diagram may be incorporated, added, or omitted according to the specification of the electronic device 1300 that is actually implemented. In other words, as necessary, two or more constituent elements may be incorporated into one constituent element, or one constituent element may be separated into two or more constituent elements. Furthermore, the function performed by each block is presented for explanation of embodiments, and a detailed operation or device does not limit the scope of rights of the disclosure.

An operating method of an electronic device according to an embodiment may be implemented in the form of a program command that is executable through various computer means. The computer-readable medium may include a program command, a data file, a data structure, and the like alone or in combination. The computer program may be specially designed and configured for the disclosure or may be well-known to one skilled in the art of computer software, to be usable. A computer-readable recording medium may include magnetic media such as hard discs, floppy discs, and magnetic tapes, optical media such as CD-ROM or DVD, magnetooptical media such as floptical disks, and hardware devices such as ROM, RAM flash memory, which are specially configured to store and execute a program command. An example of a program command may include not only machine codes created by a compiler, but also high-level programming language executable by a computer using an interpreter.

Furthermore, a method of operating a virtual image relay system and a method of operating a virtual image insertion apparatus according to embodiments may be provided by being included in a computer program product. A computer program product as goods may be dealt between a seller and a buyer.

A computer program product may include a S/W program or a computer-readable storage medium where the S/W program is stored. For example, a computer program product may include a product in the form of a S/W program, for example, a downloadable application, that is electronically distributed through a manufacturer of a broadcast receiving device or an electronic market, for example, Google PlayStore or AppStore. For electronic distribution, at least part of a S/W program may be stored in a storage medium or temporarily generated. In this case, a storage medium may be a manufacturer's server, an electronic market's server, or a storage medium of a relay server that temporarily stores a SW program.

A computer program product may include a server's storage medium or a client device's storage medium in a system including a server and a client device. Alternatively, when there is a third device, for example, a smartphone, communicatively connected to a server or a client device, the computer program product may include a storage medium of the third device. Alternatively, a computer program product may include a S/W program that is transmitted from a server to a client device or a third device, or from the third device to the client device.

In this case, server, any one of the client device and the third device may perform a method according to the disclosed embodiments by executing the computer program product. Alternatively, two or more of the server, the client device, and the third device may perform, in a distribution manner, the method according to the disclosed embodiments by executing the computer program product.

For example, a server, for example, a cloud server or an artificial intelligent server, and the like, executes a computer program product stored in the server, so that the client device communicatively connected to the server may be controlled to perform the method according to the disclosed embodiments.

## Claims

1. An electronic device (100, 1300) comprising:
a display (1351, 110);
a memory (130, 1380) storing one or more instructions; and
a processor (120, 1330) configured to execute the one or more instructions stored in the memory (130, 1380), and to:
obtain (S210) a plurality of clothing images corresponding to a plurality of clothing items;
extract (S220) feature information corresponding to each of the plurality of clothing items by inputting the plurality of clothing images to a first neural network (10),
the processor (120, 1330) being further configured to
generate (S230) candidate coordination sets by combining one or more clothing items from among the plurality of clothing items, based on the feature information corresponding to the each of the plurality of clothing items,
obtain a score for each of the candidate coordination sets by inputting the candidate coordination sets to a second neural network (600) wherein the second neural network is trained with coordination sets recommended by an expert and wherein the score indicates correspondence between the concerned candidate coordination set and information obtained by the second neural network (600) from the coordination sets recommended by an expert, and
control the display to display (S240) the candidate coordination sets based on the score information.

2. The electronic device (100, 1300) of claim 1, wherein the processor (120, 1330) is further configured to
obtain images including the plurality of clothing items,
extract the plurality of clothing images and metadata corresponding to the plurality of clothing items, by inputting the images to a third neural network (300), and
store the plurality of clothing images matched with the metadata in the memory (130, 1380).

3. The electronic device (100, 1300) of claim 2, wherein the metadata comprises at least one of category information about the plurality of clothing items, style information, color information, season information, material information, or weather information.

4. The electronic device (100, 1300) of claim 1, wherein the processor (120, 1330) is further configured to:
determine at least one clothing item of the plurality of clothing items as a recommended item, based on the feature information corresponding to the each of the plurality of clothing items and recommended feature information about a plurality of recommended coordination sets; and
control the display to display the recommended item.

5. The electronic device (100, 1300) of claim 4, wherein the display is further configured to display the plurality of recommended coordination sets, and
wherein the processor (120, 1330) is further configured to determine the recommended item based on first feature information about each of first clothing items included in a first recommended coordination set selected based on a user input from among the plurality of recommended coordination sets, and based on the feature information corresponding to the each of the plurality of clothing items.

6. The electronic device (100, 1300) of claim 5, wherein the processor (120, 1330) is further configured to:
compare the first feature information about the each of the first clothing items with the feature information corresponding to the each of the plurality of clothing items; and
determine a clothing item that is most similar to the each of the first clothing items, from among the plurality of clothing items, as the recommended item.

7. The electronic device (100, 1300) of claim 6, wherein, based on a result of the comparison indicating that similarities between the plurality of clothing items and the first clothing items are below a predetermined threshold, the processor (120, 1330) is further configured to control the display to display an object that enables a user to connect to an Internet shopping mall selling a clothing item similar to the each of the first clothing items.

8. The electronic device (100, 1300) of claim 1, wherein the processor (120, 1330) is further configured to:
select a first candidate coordination set from among the candidate coordination sets based on a user input;
determine a recommended coordination set that is most similar to the first candidate coordination set, from among a plurality of recommended coordination sets, based on candidate feature information corresponding to the selected first candidate coordination set; and
control the display to display the determined recommended coordination set.

9. The electronic device (100, 1300) of claim 1, wherein, based on a first clothing item being selected from among the plurality of clothing items based on a user input, the processor (120, 1330) is further configured to:
determine a recommended coordination set including the first clothing item, from among the candidate coordination sets, based on the score information,
control the display to display the recommended coordination set; and
control the display to display the first clothing item as distinguished from other items included in the recommended coordination set.

10. A method of operating an electronic device, the method comprising:
obtaining (S210) a plurality of clothing images corresponding to a plurality of clothing items;
extracting (S220) feature information corresponding to each of the plurality of clothing items by inputting the plurality of clothing images to a first neural network;
comprising:
generating (S230) candidate coordination sets by combining one or more clothing items from among the plurality of clothing items, based on the feature information corresponding to the each of the plurality of clothing items;
obtaining a score for each of the candidate coordination sets by inputting the candidate coordination sets to a second neural network (600) wherein the second neural network is trained with coordination sets recommended by an expert and wherein the score indicates correspondence between the concerned candidate coordination set and information obtained by the second neural network (600) from the coordination sets recommended by an expert; and
controlling the display to display (S240) the candidate coordination sets based on the score information.

11. The method of claim 10, wherein the obtaining of the plurality of clothing images comprises:
obtaining images including the plurality of clothing items; and
extracting the plurality of clothing images and metadata corresponding to the plurality of clothing items, by inputting the images to a third neural network, and
wherein the method further comprises storing the plurality of clothing images and the metadata in the memory to match each other.

12. The method of claim 11, wherein the metadata comprises at least one of category information about the plurality of clothing items, style information, color information, season information, material information, or weather information.

13. The method of claim 10, further comprising:
determining at least one clothing item of the plurality of clothing items as a recommended item, based on the feature information corresponding to the each of the plurality of clothing items and recommended feature information about a plurality of recommended coordination sets; and
controlling the display to display the recommended item.

14. The method of claim 13, further comprising displaying the plurality of recommended coordination sets,
wherein the determining of the recommended item comprises determining the recommended item based on first feature information about each of first clothing items included in a first recommended coordination set selected based on a user input from among the plurality of recommended coordination sets, and based on the feature information corresponding to the each of the plurality of clothing items.

15. The method of claim 14, wherein the determining of the recommended item comprises:
comparing the first feature information about the each of the first clothing items with the feature information corresponding to the each of the plurality of clothing items; and
determining a clothing item that is most similar to the each of the first clothing items, from among the plurality of clothing items, as the recommended item.

16. The method of claim 15, wherein, based on a result of the comparison indicating that similarities between the plurality of clothing items and the first clothing items are below a predetermined threshold, the method further comprises displaying an object that enables a user to connect to an Internet shopping mall selling a clothing item similar to the each of the first clothing items.

17. The method of claim 10, further comprising:
selecting a first candidate coordination set from among the candidate coordination sets based on a user input;
determining a recommended coordination set that is most similar to the first candidate coordination set, from among a plurality of recommended coordination sets based on candidate feature information corresponding to the selected first candidate coordination set; and
displaying the determined recommended coordination set.

18. The method of claim 10, further comprising:
based on a first clothing item being selected from among the plurality of clothing items based on a user input, determining a recommended coordination set including the first clothing item, from among the candidate coordination sets, based on the score information; and
displaying the recommended coordination set as distinguished from other items included in the recommended coordination set.

19. A computer program product comprising one or more non-transitory computer-readable recording media having stored thereon instructions which, when executed by at least one processor (120, 1330), cause the at least one processor (120, 1330) to:
obtain (S210) a plurality of clothing images corresponding to a plurality of clothing items;
extract (S220) feature information corresponding to each of the plurality of clothing items by inputting the plurality of clothing images to a first neural network;
wherein the instructions, when executed by at least one processor (120, 1330), further cause the at least one processor (120, 1330) to:
generate (S230) candidate coordination sets by combining one or more clothing items from among the plurality of clothing items, based on the feature information corresponding to the each of the plurality of clothing items;
obtain a score for each of the candidate coordination sets by inputting the candidate coordination sets to a second neural network (600) wherein the second neural network is trained with coordination sets recommended by an expert and wherein the score indicates correspondence between the concerned candidate coordination set and information obtained by the second neural network (600) from the coordination sets recommended by an expert; and
control the display to display (S240) the candidate coordination sets based on the score information.

## Patentansprüche

1. Elektronisches Gerät (100, 1300), umfassend:
eine Anzeige (1351, 110);
einen Speicher (130, 1380), in dem ein oder mehrere Befehle gespeichert sind; und
einen Prozessor (120, 1330), der so konfiguriert ist, dass er den einen oder die mehreren im Speicher (130, 1380) gespeicherten Befehle ausführt, um:
mehrere Kleidungsbilder zu erhalten (S210), die mehreren Kleidungsstücken entsprechen;
Merkmalsinformationen, die jedem der mehreren Kleidungsstücke entsprechen, durch Eingeben der mehreren Kleidungsbilder in ein erstes neuronales Netzwerk (10) zu extrahieren (S220),
wobei der Prozessor (120, 1330) ferner dazu konfiguriert ist:
Kandidaten-Koordinationssätze durch Kombinieren eines oder mehrerer Kleidungsstücke aus den mehreren Kleidungsstücken auf der Grundlage der jedem der mehreren Kleidungsstücke entsprechenden Merkmalsinformationen zu erzeugen (S230),
eine Punktzahl für jeden der Kandidaten-Koordinationssätze durch Eingeben der Kandidaten-Koordinationssätze in ein zweites neuronales Netzwerk (600) zu erhalten, wobei das zweite neuronale Netzwerk mit von einem Experten empfohlenen Koordinationssätzen trainiert wird und wobei die Punktzahl die Übereinstimmung zwischen dem betreffenden Kandidaten-Koordinationssatz und Informationen angibt, die das zweite neuronale Netzwerk (600) aus den von einem Experten empfohlenen Koordinationssätzen erhalten hat, und
die Anzeige so zu steuern, dass die Kandidaten-Koordinationssätze auf der Grundlage der Punktzahlinformationen angezeigt werden (S240).

2. Elektronisches Gerät (100, 1300) nach Anspruch 1, wobei der Prozessor (120, 1330) ferner dazu konfiguriert ist,
Bilder, die die mehreren Kleidungsstücke enthalten, zu erhalten,
die mehreren Kleidungsbilder und Metadaten, die den mehreren Kleidungsstücken entsprechen, durch Eingeben der Bilder in ein drittes neuronales Netzwerk (300) zu extrahieren und
die mehreren Kleidungsbilder, die mit den Metadaten übereinstimmen, im Speicher (130, 1380) zu speichern.

3. Elektronisches Gerät (100, 1300) nach Anspruch 2, wobei die Metadaten mindestens eines von Folgendem umfassen: Kategorieinformationen über die mehreren Kleidungsstücke, Stilinformationen, Farbinformationen, Saisoninformationen, Materialinformationen und Wetterinformationen.

4. Elektronisches Gerät (100, 1300) nach Anspruch 1, wobei der Prozessor (120, 1330) ferner dazu konfiguriert ist:
auf der Grundlage der jedem der mehreren Kleidungsstücke entsprechenden Merkmalsinformationen und empfohlener Merkmalsinformationen über mehrere empfohlene Koordinationssätze mindestens ein Kleidungsstück der mehreren Kleidungsstücke als empfohlenes Kleidungsstück zu bestimmen; und
die Anzeige so zu steuern, dass das empfohlene Kleidungsstück angezeigt wird.

5. Elektronisches Gerät (100, 1300) nach Anspruch 4, wobei die Anzeige ferner dazu konfiguriert ist, die mehreren empfohlenen Koordinationssätze anzuzeigen, und
wobei der Prozessor (120, 1330) ferner dazu konfiguriert ist, das empfohlene Stück auf der Grundlage von ersten Merkmalsinformationen über jedes der ersten Kleidungsstücke, die in einem ersten empfohlenen Koordinationssatz enthalten sind, der auf der Grundlage einer Benutzereingabe aus den mehreren empfohlenen Koordinationssätzen ausgewählt wird, und auf der Grundlage der jedem der mehreren Kleidungsstücke entsprechenden Merkmalsinformationen zu bestimmen.

6. Elektronisches Gerät (100, 1300) nach Anspruch 5, wobei der Prozessor (120, 1330) ferner dazu konfiguriert ist:
die ersten Merkmalsinformationen über jedes der ersten Kleidungsstücke mit den jedem der mehreren Kleidungsstücke entsprechenden Merkmalsinformationen zu vergleichen; und
ein Kleidungsstück aus den mehreren Kleidungsstücken, das jedem der ersten Kleidungsstücke am ähnlichsten ist, als das empfohlene Stück zu bestimmen.

7. Elektronisches Gerät (100, 1300) nach Anspruch 6, wobei der Prozessor (120, 1330) auf der Grundlage eines Vergleichsergebnisses, das anzeigt, dass die Ähnlichkeiten zwischen den mehreren Kleidungsstücken und den ersten Kleidungsstücken unter einem vorbestimmten Schwellenwert liegen, ferner dazu konfiguriert ist, die Anzeige so zu steuern, dass ein Objekt angezeigt wird, das es einem Benutzer ermöglicht, eine Verbindung zu einem Internet-Einkaufszentrum herzustellen, das ein Kleidungsstück verkauft, das jedem der ersten Kleidungsstücke ähnlich ist.

8. Elektronisches Gerät (100, 1300) nach Anspruch 1, wobei der Prozessor (120, 1330) ferner dazu konfiguriert ist:
auf der Grundlage einer Benutzereingabe einen ersten Kandidaten-Koordinationssatz aus den Kandidaten-Koordinationssätzen auszuwählen;
einen empfohlenen Koordinationssatz, der dem ersten Kandidaten-Koordinationssatz am ähnlichsten ist, aus mehreren empfohlenen Koordinationssätzen auf der Grundlage von Kandidatenmerkmalinformationen, die dem ausgewählten ersten Kandidaten-Koordinationssatz entsprechen, zu bestimmen; und
die Anzeige so zu steuern, dass der bestimmte empfohlene Koordinationssatz angezeigt wird.

9. Elektronisches Gerät (100, 1300) nach Anspruch 1, wobei der Prozessor (120, 1330) auf der Grundlage eines ersten Kleidungsstücks, das aus den mehreren Kleidungsstücken auf der Grundlage einer Benutzereingabe ausgewählt wird, ferner dazu konfiguriert ist:
auf der Grundlage der Punktzahlinformationen aus den Kandidaten-Koordinationssätzen einen empfohlenen Koordinationssatz, der das erste Kleidungsstück enthält, zu bestimmen,
die Anzeige so zu steuern, dass der empfohlene Koordinationssatz angezeigt wird; und
die Anzeige so zu steuern, dass das erste Kleidungsstück im Unterschied zu anderen im empfohlenen Koordinationssatz enthaltenen Kleidungsstücken angezeigt wird.

10. Verfahren zum Betreiben eines elektronischen Geräts, wobei das Verfahren Folgendes umfasst:
Erhalten (S210) mehrerer Kleidungsbilder, die mehreren Kleidungsstücken entsprechen;
Extrahieren (S220) von Merkmalsinformationen, die jedem der mehreren Kleidungsstücke entsprechen, durch Eingeben der mehreren Kleidungsbilder in ein erstes neuronales Netzwerk;
umfassend:
Erzeugen (S230) von Kandidaten-Koordinationssätzen durch Kombinieren eines oder mehrerer Kleidungsstücke aus den mehreren Kleidungsstücken auf der Grundlage der Merkmalsinformationen, die jedem der mehreren Kleidungsstücke entsprechen;
Erhalten einer Punktzahl für jeden der Kandidaten-Koordinationssätze durch Eingeben der Kandidaten-Koordinationssätze in ein zweites neuronales Netzwerk (600), wobei das zweite neuronale Netzwerk mit von einem Experten empfohlenen Koordinationssätzen trainiert wird, und wobei die Punktzahl die Übereinstimmung zwischen dem betreffenden Kandidaten-Koordinationssatz und Informationen angibt, die das zweite neuronale Netzwerk (600) aus den von einem Experten empfohlenen Koordinationssätzen erhalten hat; und
Steuern der Anzeige, um die Kandidaten-Kombinationssätze auf der Grundlage der Punktzahlinformationen anzuzeigen (S240).

11. Verfahren nach Anspruch 10, wobei das Erhalten der mehreren Kleidungsbilder Folgendes umfasst:
Erhalten von Bildern, die die mehreren Kleidungsstücke enthalten; und
Extrahieren der mehreren Kleidungsbilder und von Metadaten, die den mehreren Kleidungsstücken entsprechen, durch Eingeben der Bilder in ein drittes neuronales Netzwerk, und
wobei das Verfahren ferner das Speichern der mehreren Kleidungsbilder und der Metadaten im Speicher umfasst, um sie aufeinander abzustimmen.

12. Verfahren nach Anspruch 11, wobei die Metadaten mindestens eines von Folgendem umfassen: Kategorieinformationen über die mehreren Kleidungsstücke, Stilinformationen, Farbinformationen, Saisoninformationen, Materialinformationen und Wetterinformationen.

13. Verfahren nach Anspruch 10, umfassend ferner:
Bestimmen mindestens eines Kleidungsstücks der mehreren Kleidungsstücke als empfohlenes Kleidungsstück auf der Grundlage der Merkmalsinformationen, die jedem der mehreren Kleidungsstücke entsprechen, und empfohlener Merkmalsinformationen über mehrere empfohlene Koordinationssätze; und
Steuern der Anzeige, um das empfohlene Stück anzuzeigen.

14. Verfahren nach Anspruch 13, umfassend ferner das Anzeigen der mehreren empfohlenen Koordinationssätze,
wobei das Bestimmen des empfohlenen Stückes das Bestimmen des empfohlenen Stückes auf der Grundlage von ersten Merkmalsinformationen über jedes der ersten Kleidungsstücke umfasst, die in einem ersten empfohlenen Koordinationssatz enthalten sind, der auf der Grundlage einer Benutzereingabe aus den mehreren empfohlenen Koordinationssätzen ausgewählt wird, und auf der Grundlage der Merkmalsinformationen, die jedem der mehreren Kleidungsstücke entsprechen.

15. Verfahren nach Anspruch 14, wobei das Bestimmen des empfohlenen Stückes Folgendes umfasst:
Vergleichen der ersten Merkmalsinformationen über jedes der ersten Kleidungsstücke mit den Merkmalsinformationen, die jedem der mehreren Kleidungsstücke entsprechen; und
Bestimmen eines Kleidungsstücks aus den mehreren Kleidungsstücken, der jedem der ersten Kleidungsstücke am ähnlichsten ist, als empfohlenes Stück.

16. Verfahren nach Anspruch 15, wobei das Verfahren auf der Grundlage eines Vergleichsergebnisses, das angibt, dass die Ähnlichkeiten zwischen den mehreren Kleidungsstücken und den ersten Kleidungsstücken unter einem vorbestimmten Schwellenwert liegen, ferner das Anzeigen eines Objekts umfasst, das es einem Benutzer ermöglicht, eine Verbindung zu einem Internet-Einkaufszentrum herzustellen, das ein Kleidungsstück verkauft, das jedem der ersten Kleidungsstücke ähnlich ist.

17. Verfahren nach Anspruch 10, umfassend ferner:
Auswählen eines ersten Kandidaten-Koordinationssatzes aus den Kandidaten-Koordinationssätzen auf der Grundlage einer Benutzereingabe;
Bestimmen eines empfohlenen Koordinationssatzes aus mehreren empfohlenen Koordinationssätzen, der dem ersten Kandidaten-Koordinationssatz am ähnlichsten ist, auf der Grundlage von Kandidatenmerkmalinformationen, die dem ausgewählten ersten Kandidaten-Koordinationssatz entsprechen; und
Anzeigen des bestimmten empfohlenen Koordinationssatzes.

18. Verfahren nach Anspruch 10, umfassend ferner:
auf der Grundlage eines ersten Kleidungsstücks, das aus den mehreren Kleidungsstücken auf der Grundlage einer Benutzereingabe ausgewählt wird, Bestimmen eines empfohlenen Kombinationssatzes aus den Kandidaten-Koordinationssätzen, der das erste Kleidungsstück enthält, auf der Grundlage der Punktzahlinformationen; und
Anzeige des empfohlenen Koordinationssatzes im Unterschied zu anderen Stücken, die im empfohlenen Koordinationssatz enthalten sind.

19. Computerprogrammprodukt, umfassend ein oder mehrere nicht flüchtige, computerlesbare Aufzeichnungsmedien, auf denen Befehle gespeichert sind, die, wenn sie von mindestens einem Prozessor (120, 1330) ausgeführt werden, den mindestens einen Prozessor (120, 1330) dazu veranlassen:
mehrere Kleidungsbilder, die mehreren Kleidungsstücken entsprechen, zu erhalten (S210);
Merkmalsinformationen, die jedem der mehreren Kleidungsstücke entsprechen, durch Eingeben der mehreren Kleidungsbilder in ein erstes neuronales Netzwerk zu extrahieren (S220);
wobei
die Befehle, wenn sie von mindestens einem Prozessor (120, 1330) ausgeführt werden, den mindestens einen Prozessor (120, 1330) ferner dazu veranlassen:
Kandidaten-Koordinationssätze durch Kombinieren eines oder mehrerer Kleidungsstücke aus den mehreren Kleidungsstücken auf der Grundlage der jedem der mehreren Kleidungsstücke entsprechenden Merkmalsinformationen zu erzeugen (S230);
eine Punktzahl für jeden der Kandidaten-Koordinationssätze durch Eingeben der Kandidaten-Koordinationssätze in ein zweites neuronales Netzwerk (600) zu erhalten, wobei das zweite neuronale Netzwerk mit von einem Experten empfohlenen Koordinationssätzen trainiert wird und wobei die Punktzahl die Übereinstimmung zwischen dem betreffenden Kandidaten-Koordinationssatz und Informationen angibt, die das zweite neuronale Netzwerk (600) aus den von einem Experten empfohlenen Koordinationssätzen erhalten hat; und
Steuern der Anzeige, um die Kandidaten-Kombinationssätze auf der Grundlage der Punktzahlinformationen anzuzeigen (S240).

## Revendications

1. Équipement électronique (100, 1300), comprenant :
un afficheur (1351, 110) ;
une mémoire (130, 1380) stockant une ou plusieurs instructions ; et
un processeur (120, 1330) configuré pour exécuter l'une ou plusieurs instructions stockées dans la mémoire (130, 1380) et pour :
obtenir (S210) une pluralité d'images de vêtement correspondant à une pluralité d'articles de vêtement ;
extraire (S220) une information caractéristique correspondant à chacun de la pluralité d'articles de vêtement en entrant la pluralité d'images de vêtement dans un premier réseau neuronal (10),
le processeur (120, 1330) étant configuré en outre pour :
générer (S230) des ensembles candidats de coordinations en combinant un ou plusieurs articles de vêtement parmi la pluralité d'articles de vêtement, sur la base de l'information caractéristique correspondant à chacun de la pluralité d'articles de vêtement,
obtenir un score pour chacun des ensembles candidats de coordinations en entrant les ensembles candidats de coordinations dans un deuxième réseau neuronal (600) dans lequel le deuxième réseau neuronal est entraîné avec des ensembles recommandés de coordinations par un expert et dans lequel le score indique une correspondance entre l'ensemble candidat concerné de coordinations et une information obtenue par le deuxième réseau neuronal (600) à partir des ensembles recommandés de coordinations par un expert, et
commander l'afficheur à afficher (S240) les ensembles candidats de coordinations sur la base de l'information de score.

2. Équipement électronique (100, 1300) selon la revendication 1, dans lequel le processeur (120, 1330) est configuré en outre pour :
obtenir des images incluant une pluralité d'articles de vêtement,
extraire la pluralité d'images de vêtement et des métadonnées correspondant à la pluralité d'articles de vêtement, en entrant les images dans un troisième réseau neuronal (300), et
stocker la pluralité d'images de vêtement correspondant aux métadonnées dans la mémoire (130, 1380).

3. Équipement électronique (100, 1300) selon la revendication 2, dans lequel les métadonnées comprennent au moins l'une parmi des informations de catégorie sur la pluralité d'articles de vêtement, des informations de style, des informations de couleur, des informations de saison, des informations de matériau ou des informations météorologiques.

4. Équipement électronique (100, 1300) selon la revendication 1, dans lequel le processeur (120, 1330) est configuré en outre pour :
déterminer au moins un article de vêtement parmi la pluralité d'articles de vêtement comme article recommandé, sur la base de l'information caractéristique correspondant à chacun de la pluralité d'articles de vêtement et d'une information caractéristique recommandée sur une pluralité d'ensembles recommandés de coordinations ; et
commander l'afficheur à afficher l'article recommandé.

5. Équipement électronique (100, 1300) selon la revendication 4, dans lequel l'afficheur est configuré en outre pour afficher la pluralité d'ensembles recommandés de coordinations, et
dans lequel le processeur (120, 1330) est configuré en outre pour déterminer l'article recommandé sur la base d'une première information caractéristique sur chacun des premiers articles de vêtement inclus dans un premier ensemble recommandé sélectionné de coordinations sur la base d'une entrée utilisateur parmi la pluralité d'ensembles recommandés de coordinations, et sur la base de l'information caractéristique correspondant à chacun de la pluralité d'articles de vêtement.

6. Équipement électronique (100, 1300) selon la revendication 5, dans lequel le processeur (120, 1330) est configuré en outre pour :
comparer la première information caractéristique sur chacun des premiers articles de vêtement avec l'information caractéristique correspondant à chacun de la pluralité d'articles de vêtement ; et
déterminer un article de vêtement qui est le plus similaire à chacun des premiers articles de vêtement, parmi la pluralité d'articles de vêtement comme l'article recommandé.

7. Équipement électronique (100, 1300) selon la revendication 6, dans lequel, sur la base d'un résultat de la comparaison indiquant qu'une similarité entre la pluralité d'articles de vêtement et les premiers articles de vêtement est inférieure à un seuil prédéterminé, le processeur (120, 1330) est configuré en outre pour commander l'afficheur à afficher un objet permettant à un utilisateur de se connecter à un centre commercial en ligne vendant un article de vêtement similaire à chacun des premiers articles de vêtement.

8. Équipement électronique (100, 1300) selon la revendication 1, dans lequel le processeur (120, 1330) est configuré en outre pour :
sélectionner un premier ensemble candidat de coordinations parmi les ensembles candidats de coordinations sur la base d'une entrée utilisateur ;
déterminer un ensemble recommandé de coordinations qui est le plus similaire au premier ensemble candidat de coordinations, parmi une pluralité d'ensembles recommandés de coordinations, sur la base d'une information caractéristique candidate correspondant au premier ensemble candidat sélectionné de coordinations ; et
commander l'afficheur à afficher l'ensemble recommandé déterminé de coordinations.

9. Équipement électronique (100, 1300) selon la revendication 1, dans lequel, sur la base de ce qu'un premier article de vêtement est sélectionné parmi la pluralité d'articles de vêtement sur la base d'une entrée utilisateur, le processeur (120, 1330) est configuré en outre pour :
déterminer un ensemble recommandé de coordinations incluant le premier article de vêtement, parmi les ensembles candidats de coordinations, sur la base de l'information de score,
commander l'afficheur à afficher l'ensemble recommandé de coordinations ; et
commander l'afficheur à afficher le premier article de vêtement de manière à le distinguer des autres articles inclus dans l'ensemble recommandé de coordinations.

10. Procédé pour faire fonctionner un équipement électronique, comprenant :
obtenir (S210) une pluralité d'images de vêtement correspondant à une pluralité d'articles de vêtement ;
extraire (S220) une information caractéristique correspondant à chacun de la pluralité d'articles de vêtement en entrant la pluralité d'images de vêtement dans un premier réseau neuronal ;
comprenant :
générer (S230) des ensembles candidats de coordinations en combinant un ou plusieurs articles de vêtement parmi la pluralité d'articles de vêtement, sur la base de l'information caractéristique correspondant à chacun de la pluralité d'articles de vêtement ;
obtenir un score pour chacun des ensembles candidats de coordinations en entrant les ensembles candidats de coordinations dans un deuxième réseau neuronal (600) dans lequel le deuxième réseau neuronal est entraîné avec des ensembles recommandés de coordinations par un expert et dans lequel le score indique une correspondance entre l'ensemble candidat concerné de coordinations et une information obtenue par le deuxième réseau neuronal (600) à partir des ensembles recommandés de coordinations par un expert ; et
commander l'afficheur à afficher (S240) les ensembles candidats de coordinations sur la base de l'information de score.

11. Procédé selon la revendication 10, dans lequel, l'obtention d'images de vêtement consiste à :
obtenir des images incluant la pluralité d'articles de vêtement ; et
extraire la pluralité d'images de vêtement et des métadonnées correspondant à la pluralité d'articles de vêtement, en entrant les images dans un troisième réseau neuronal, et
dans lequel le procédé comprend en outre stocker la pluralité d'images de vêtement et les métadonnées dans la mémoire pour faire correspondre l'un à l'autre.

12. Procédé selon la revendication 11, dans lequel les métadonnées comprennent au moins l'une parmi des informations de catégorie sur la pluralité d'articles de vêtement, des informations de style, des informations de couleur, des informations de saison, des informations de matériau ou des informations météorologiques.

13. Procédé selon la revendication 10, comprenant en outre :
déterminer au moins un article de vêtement parmi la pluralité d'articles de vêtement comme article recommandé, sur la base de l'information caractéristique correspondant à chacun de la pluralité d'articles de vêtement et d'une information caractéristique recommandée sur une pluralité d'ensembles recommandés de coordinations ; et
commander l'afficheur à afficher l'article recommandé.

14. Procédé selon la revendication 13, comprenant en outre afficher la pluralité d'ensembles recommandés de coordinations,
dans lequel la détermination de l'article recommandé consiste à déterminer l'article recommandé sur la base d'une première information caractéristique sur chacun des premiers articles de vêtement inclus dans un premier ensemble recommandé sélectionné de coordinations sur la base d'une entrée utilisateur parmi la pluralité d'ensembles recommandés de coordinations, et sur la base de l'information caractéristique correspondant à chacun de la pluralité d'articles de vêtement.

15. Procédé selon la revendication 14, dans lequel la détermination de l'article de vêtement consiste à :
comparer la première information caractéristique sur chacun des premiers articles de vêtement avec l'information caractéristique correspondant à chacun de la pluralité d'articles de vêtement ; et
déterminer un article de vêtement qui est le plus similaire à chacun des premiers articles de vêtement, parmi la pluralité d'articles de vêtement comme l'article recommandé.

16. Procédé selon la revendication 15, dans lequel, sur la base d'un résultat de la comparaison indiquant qu'une similarité entre la pluralité d'articles de vêtement et les premiers articles de vêtement est inférieure à un seuil prédéterminé, le procédé comprend en outre afficher un objet permettant à un utilisateur de se connecter à un centre commercial en ligne vendant un article de vêtement similaire à chacun des premiers articles de vêtement.

17. Procédé selon la revendication 10, comprenant en outre :
sélectionner un premier ensemble candidat de coordinations parmi les ensembles candidats de coordinations sur la base d'une entrée utilisateur ;
déterminer un ensemble recommandé de coordinations qui est le plus similaire au premier ensemble candidat de coordinations, parmi une pluralité d'ensembles recommandés de coordinations, sur la base d'une information caractéristique candidate correspondant au premier ensemble candidat sélectionné de coordinations ; et
afficher l'ensemble recommandé déterminé de coordinations.

18. Procédé selon la revendication 10, comprenant en outre :
sur la base de ce qu'un premier article de vêtement est sélectionné parmi la pluralité d'articles de vêtement sur la base d'une entrée utilisateur, déterminer un ensemble recommandé de coordinations incluant le premier article de vêtement, parmi les ensembles candidats de coordinations, sur la base de l'information de score ; et
afficher l'ensemble recommandé de coordinations de manière à le distinguer des autres articles inclus dans l'ensemble recommandé de coordinations.

19. Produit de programme informatique comprenant un ou plusieurs supports d'enregistrement lisibles par ordinateur non transitoires sur lesquels sont stockées des instructions qui, lorsqu'elles sont exécutées par au moins un processeur (120, 1330), amènent l'au moins un processeur (120, 1330) à :
obtenir (S210) une pluralité d'images de vêtement correspondant à une pluralité d'articles de vêtement ;
extraire (S220) une information caractéristique correspondant à chacun de la pluralité d'articles de vêtement en entrant la pluralité d'images de vêtement dans un premier réseau neuronal ;
dans lequel
les instructions, lorsqu'elles sont exécutées par l'au moins un processeur (120, 1330), amènent en outre l'au moins un processeur (120, 1330) à :
générer (S230) des ensembles candidats de coordinations en combinant un ou plusieurs articles de vêtement parmi la pluralité d'articles de vêtement, sur la base de l'information caractéristique correspondant à chacun de la pluralité d'articles de vêtement ;
obtenir un score pour chacun des ensembles candidats de coordinations en entrant les ensembles candidats de coordinations dans un deuxième réseau neuronal (600) dans lequel le deuxième réseau neuronal est entraîné avec des ensembles recommandés de coordinations par un expert et dans lequel le score indique une correspondance entre l'ensemble candidat concerné de coordinations et une information obtenue par le deuxième réseau neuronal (600) à partir des ensembles recommandés de coordinations par un expert ; et
commander l'afficheur à afficher (S240) les ensembles candidats de coordinations sur la base de l'information de score.
